**Europäisches Patentamt**

**European Patent Office**

**Office européen des brevets**

(11) Veröffentlichungsnummer: **0 170 293**

**A1**

(12) # EUROPÄISCHE PATENTANMELDUNG

(21) Anmeldenummer: 85109836.8

(22) Anmeldetag: 05.08.85

(51) Int. Cl.⁴: **H 02 M 3/338**

(30) Priorität: 07.08.84 DE 3429100

(43) Veröffentlichungstag der Anmeldung:
05.02.86 Patentblatt 86/6

(84) Benannte Vertragsstaaten:
CH DE FR GB IT LI NL SE

(71) Anmelder: **Siemens Aktiengesellschaft
Berlin und München Wittelsbacherplatz 2
D-8000 München 2(DE)**

(72) Erfinder: **Stasch, Harald, Dipl.-Ing. (FH)
Ammerseestrasse 16
D-8027 Neuried(DE)**

(54) **Schaltnetzteil mit freischwingendem Durchflusswandler ohne Regelschleife.**

(57) Die Erfindung betrifft ein Schaltnetzteil mit einer Gleichrichteranordnung (BG) zur Erzeugung einer Gleichspannung (UG) aus einer Eingangswechselspannung (UE), und mit einer einen Schalttransistor (T1) und einen Übertrager (Ü) aufweisenden Umrichteranordnung. Erfindungsgemäß vorgesehen ist, daß die Umrichteranordnung als freischwingender Durchflußumrichter ausgebildet ist, wobei der Schalttransistor (T1) im stromlosen Zustand eingeschaltet wird, und daß die Umrichteranordnung sekundärseitig einen, vom Übertragber (Ü) synchronisierten, eine Ausgangsgleichspannung (UA) regelnden Sekundärschaltregler (SS) aufweist.

EP 0 170 293 A1

## Schaltnetzteil mit freischwingendem Durchflußwandler ohne Regelschleife

Die Erfindung betrifft ein Schaltnetzteil gemäß dem Oberbegriff des Patentanspruchs 1.

Schaltnetzteile werden heutzutage in großem Umfang zur Stromversorgung verwendet, da sie gegenüber 50 Hz Netzteilen leichter und kleiner, sowie billiger herzustellen sind.

Allgemein bekannte Schaltnetzteile weisen einen Übertrager auf, dessen primärseitige Wicklung durch einen Schalttransistor mit Energie geladen und an dessen sekundärseitiger Wicklung bzw. Wicklungen diese Energie in Form einer oder mehrerer konstanter Spannungen entnommen wird. Der Übertrager ist hierbei Bestandteil eines Durchflußwandlers oder eines Sperrwandlers. Aufbau und Wirkungsweise dieser Wandlertypen sind in dem Buch "Schaltnetzteile " von Joachim Wüstehube, 1979, Expert-Verlag, Kapitel 2.1 ausführlich beschrieben.

Schaltnetzteile arbeiten meistens in einem Frequenzbereich von 16 bis 50 kHz. Da die auftretenden Strom- bzw. Spannungsverläufe große Überschwingungsanteile aufweisen, und zudem hohe Ströme und Spannungen geschaltet werden müssen, muß im Frequenzbereich oberhalb 150 kHz (Langwelle) noch mit erheblichen Störungen gerechnet werden. Für den Frequenzgang dieser Störungen gibt es bindende Vorschriften, soweit eine Ausbreitung in öffentlichen Netzen oder eine Ausstrahlung in den offenen Raum möglich sind.

Kro 1 Ktz / 06.08.1984

Zur Unterdrückung von asymmetrischen Störspannungen im Netz weisen Übertrager in Schaltnetzteilen zwischen der primären und der sekundären Seite eine Schirmung auf. Die Schirmung besteht beispielsweise aus einer Kupferfolie, die isoliert über die Primärwicklung gelegt ist.

Sperrwandlernetzteile weisen einen Übertrager mit einem Luftspalt auf. Insbesondere bei hohen Leistungen entstehen in den Transformatorkernen der Übertrager und in der Schirmung hohe Wirbelstromverluste. Es ist deshalb allgemein üblich (siehe Wüstehube), statt der Kupferfolie zur Schirmung ein sog. Leitvlies zu verwenden. Die Herstellung eines solchen Übertragers für einen Sperrwandler ist daher aufwendig und teuer.

Die bekannten Durchflußwandler weisen im wesentlichen festtaktgesteuerte periodisch arbeitende Schalttransistoren, sowie einen Übertrager ohne Luftspalt auf, dessen Primärwicklung im Kollektorkreis des Schalttransistors liegt und an dessen Sekundärwicklung über eine Gleichrichter-Anordnung eine Gleichspannung abnehmbar ist. Da bei diesem Schaltprinzip mit einer vorgegebenen Schaltfrequenz gearbeitet wird, ist der Einschaltzeitpunkt des Schalttransistors vorbestimmt. Dieses Schaltprinzip weist den Nachteil auf, daß der Schalttransistor unter Strom eingeschaltet wird und eine Freilaufdiode im Sekundärkreis unter Strom in den gesperrten Zustand übergeht. Dies führt zu hohen Funkstörspannungen auf der Netzleitung. Wenn diese Umrichterschaltungen in Textendgeräten der Kommunikationstechnik mit galvanischer Trennung nach Schutzklasse 2, das heißt ohne Erdleiter eingesetzt werden, so können diese Geräte nicht auf den erforderlichen Funkstörpegel der Grenzwertklasse B entstört werden.

Es ist bekannt bei Schaltnetzteilen zur Aufrechterhaltung der sekundärseitig abgegebenen Ausgangsspannung das Verhältnis von Einschalt- zu Ausschaltzeit bzw. das Verhältnis von Einschaltzeit zur Summe von Einschalt- und Ausschaltzeit, das heißt das sogenannte Tastverhältnis für den Schalttransistor zu regeln.

Es ist Aufgabe der Erfindung ein Schaltnetzteil mit galvanischer Trennung anzugeben, bei dem nur geringe Störimpulse auf den Anschlußleitungen auftreten, das einen Übertrager mit geringen Wirbelstromverlusten aufweist, und das eine geregelte Ausgangsspannung abgibt.

Diese Aufgabe wird erfindungsgemäß durch die im kennzeichnenden Teil des Patentanspruchs 1 angegebenen Merkmale gelöst.

Ein Vorteil des erfindungsgemäßen Schaltnetzteils liegt darin, daß der freischwingende Durchflußumrichter einen dreieckförmigen Kollektorstrom im Schalttransistor bewirkt, wodurch der Umrichter leicht entstörbar ist.

Durch den sekundärseitig angeordneten Sekundärschaltregler ist eine Ausgangsspannungsregelung ohne Regelschleife möglich.

Dadurch, daß der Schalttransistor nicht unter Strom eingeschaltet wird, sind die Schaltverluste reduziert.

Dadurch, daß das erfindungsgemäße Schaltnetzteil einen Durchflußumrichter aufweist, kann zur Schirmung der Primärwicklung des Übertragers eine einfach zu verarbeitende Metallfolie verwendet werden.

Durch einen sychronisierenden Widerstand wird erreicht, daß der Sekundärschalttransistor zu Beginn der Leitendphase des Schalttransistors leitend geschaltet wird.

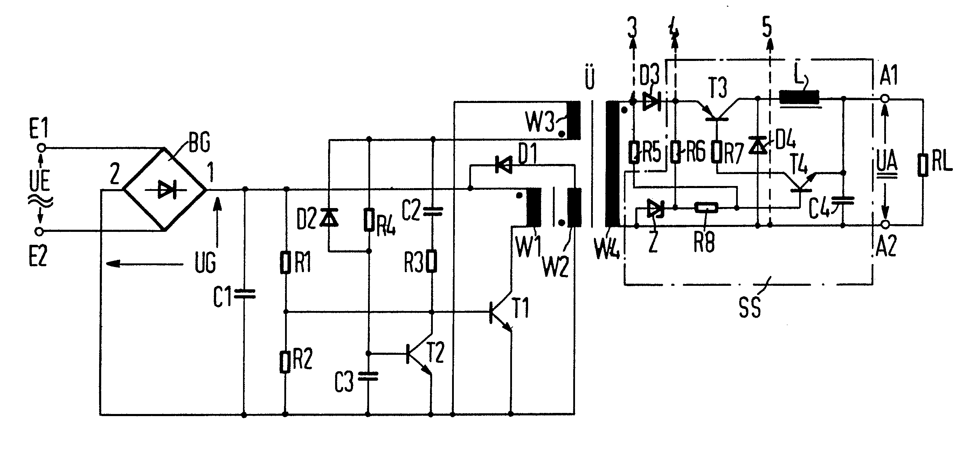

Im folgenden wird die Erfindung anhand eines in der Zeichnung dargestellten Ausführungsbeispieles beschrieben.

Das in der Zeichnung dargestellte Schaltnetzteil weist einen Durchflußwandler mit zwei Eingangsklemmen E1, E2 auf, an denen eine Eingangswechselspannung UE anliegt.

Ein Brückengleichrichter BG wandelt diese Eingangswechselspannung UE in eine Gleichspannung UG um, und gibt diese an zwei Klemmen 1,2 ab, wobei an der Klemme 1 ein gegenüber der Klemme 2 positives Potential abgegeben wird. Die Gleichspannung UG wird von einem zwischen die Klemmen 1 und 2 geschalteten Kondensator C1 geglättet. Zwischen die Klemmen 1 und 2 sind weiter eine Serienschaltung aus zwei Widerständen R1 und R2, und die Serienschaltung aus einer Primärwicklung W1 und der Kollektoremitterstrecke eines Schalttransistors T1 geschaltet. Ein nicht näher bezeichneter Spannungsteilerpunkt zwischen den Widerständen R1 und R2 ist mit der Basis des Schalttransistors T1 verbunden.

Die Primärwicklung W1, eine Entmagnetisierungswicklung W2, eine Steuerwicklung W3 und eine Sekundärwicklung W4 sind Bestandteile eines Übertragers Ü. Die Primärwicklung W1 und die Sekundärwicklung W4 weisen jeweils den gleichen, die Steuerwicklung W3 und die Entmagnetisierungswicklung W2 den entgegengesetzten Wicklungssinn auf. Die Entmagnetisierungswicklung W2, ist in Serienschaltung mit einer Diode D1 zwischen die beiden Klemmen 1 und 2 geschaltet, wobei die Kathode der Diode D1 mit der Klemme 1 verbunden ist.

Zwischen die Basis des Schalttransistors T1 und die Klemme 2 ist die Kollektoremitterstrecke eines Steuertransistors T2 geschaltet. Die Basis des Steuertransistors T2 ist über einen Kondensator C3, und über die Serienschaltung aus einem Widerstand R4 und der Steuerwicklung W3 mit der Klemme 2 verbunden. Dem Widerstand R4 ist eine Diode D2 parallel geschaltet, deren Anode mit der Basis des Steuertransistors T2 verbunden ist. Die Kathode der Diode D2 ist über die Serienschaltung aus einem Kondensator C2 und einem Widerstand R3 mit der Basis des Schalttransistors T1 verbunden.

Der Widerstand R3 bildet zusammen mit dem Kondensator C2 eine Einschaltstufe, und der Kondensator C3 mit dem Widerstand R4 und dem Steuertransistor T2 sowie der Diode D2 eine Ausschaltstufe für den Schalttransistor T1.

Auf der Sekundärseite sind ein Sekundärschaltregler SS, eine Gleichrichterdiode D3, und ein Widerstand R5 vorgesehen. Das eine Ende des Sekundärwicklung W4 ist über die Gleichrichterdiode D3, die Emitter-Kollektor-Strecke eines Sekundärschalttransistors T3, und eine Induktivität L mit einer Ausgangsklemme A1 verbunden. Das andere Ende der Sekundärwicklung W4 ist direkt mit einer Ausgangsklemme A2 verbunden, die über eine in Flußrichtung gepolte Freilaufdiode D4 mit dem Kollektor des Sekundärschalttransistors T3 verbunden ist. Zur Glättung einer an den Ausgangklemmen A1, A2 abgreifbaren Ausgangsgleichspannung UA ist zwischen diese ein Kondensator C4 geschaltet. Zwischen die Ausgangsklemmen A1 und A2 ist weiter ein Lastwiderstand RL geschaltet, der symbolisch einen externen Verbraucher darstellt.

Der Emitter des Sekundärschalttransistors T3, an dem die Kathode der Gleichrichterdiode D3 angeschaltet ist, ist über einen Widerstand R6 mit der Kathode einer Zenerdiode Z verbunden, deren Anode an der Ausgangsklemme A2 angeschaltet ist. Die Basis des Sekundärschaltransistors T3 ist über einen Widerstand R 7 und über die Kollektor-Emitter-Strecke eines Transistors T4 mit der Ausgangsklemme A1 verbunden. Die Anode der Gleichrichterdiode D3 ist über den Widerstand R5 mit der Basis des Transistors T4, und weiter über einen Widerstand R8 mit der Kathode der Zenerdiode Z verbunden. Die Anode der Gleichrichterdiode D3 ist mit einer Klemme 3, deren Kathode ist mit einer Klemme 4, und die Ausgangsklemme A2 ist mit einer Klemme 5 verbunden.

An den Klemmen 3, 4 und 5 sind weitere Sekundärschaltregler anschließbar, denen die Sekundärwicklung W4, die Gleichrichterdiode D3, und die Ausgangsklemme A2 gemeinsam sind.

Im folgenden wird die Wirkungsweise des erfindungsgemäßen Schaltnetzteils beschrieben.

Die gleichgerichtete Eingangswechselspannung UE, das heißt die Gleichspannung UG wird mit der Primärwicklung W1 des Übertragers Ü und dem Schalttransistor T1 in eine getaktete Spannung umgeformt. Beim Einschalten des Schaltnetzteils wird der Kondensator C2 über die Widerstände R1 und R3 und über die Steuerwicklung W3 aufgeladen. Wenn die Schwellwertspannung an der Basis des Schalttransistors T1 erreicht ist, wird dieser leitend geschaltet und der Durchflußwandler beginnt zu arbeiten.

Während der Leitendphase des Schalttransistors T1 wird Energie auf die Sekundärseite des Übertragers Ü übertragen. Zugleich sind die Gleichrichterdiode D3 und der Sekundärschalttransistor T3 leitend, und die Freilaufdiode D4 gesperrt. Ein dabei durch die Induktivität L fließender Strom ermöglicht es an dem Kondensator C4 die Aus-

0170293

gangsgleichspannung UA abzunehmen. Während der Strom fließt nimmt nicht nur der Lastwiderstand RL Energie auf, sondern auch die Induktivität L, die sie als magnetische Energie speichert. Der Spitzenwert des Stromes im Primärkreis ist durch die Induktivität L, durch die Summe der Verlustwiderstände im Primär- und Sekundärkreis, durch die Einschaltdauer des Schalttransistors T1, und durch den Wert der Ausgangsgleichspannung UA bestimmt.

Die Wirkungsweise des Sekundärschaltreglers SS ist an und für sich bekannt. Beim Absinken der an den Ausgangsklemmen A1 und A2 abgreifbaren Ausgangsgleichspannung UA wird, während der Leitendphase des Schalttransistors T1, d.h. bei einer am Emitter des Sekundärschalttransistors T3 anliegenden Spannung, dieser über den Transistor T4 leitend geschaltet. Wenn die Ausgangsgleichspannung UA einen durch die Zenerdiode Z und die Basis-Emitter-Strecke des Transistors T4 vorgegebenen Schwellwert überschreitet, werden der Transistor T4 und damit auch der Sekundärschalttransistor T3 gesperrt. Der Stromfluß durch den Lastwiderstand RL wird hierbei durch die Freilaufdiode D4 und die Induktivität L aufrechterhalten.

Erfindungsgemäß sind auf der Sekundärseite des Schaltnetzteiles die Gleichrichterdiode D3 und der Widerstand R5 vorgesehen. Die Gleichrichterdiode D3 dient zur Erzeugung einer am Eingang des Sekundärschaltreglers SS, d.h. am Emitter des Sekundärschalttransistors T3 anliegenden, pulsierenden Gleichspannung. Der Widerstand R5 dient zur Sychronisation des Sekundärschaltreglers SS. Über diesen sychronisierenden Widerstand R5 werden der Transistor T4 und damit auch der Sekundärschalttransistor T3 zu Beginn der Leitendphase des Schalttransistors T1 leitend geschaltet. Auf diese Weise ist sichergestellt, daß gleich zu Beginn der Energieübertragung auf die Sekundärseite die Induktivität L Energie aufnehmen kann.

Ebenfalls während der Leitendphase des Schalttransistors T1 wird auf der Primärseite des Übertragers Ü der Kondensator C3 durch den in der Steuerwicklung W3 induzierten Strom über den Widerstand R4 aufgeladen. Nach Aufladung des Kondensator C3 auf die Schwellwertspannung der Basis des Steuertransistors T2, wird dieser impulsartig leitend geschaltet und der Schalttransistor T1 gesperrt. Die Einschaltdauer des Schalttransistors T1 ist also im wesentlichen durch die Zeitkonstante, gebildet aus dem Widerstand R4 und dem Kondensator C3 bestimmt. Während der Sperrphase des Schalttransistors T1 liegt an dessen Basis eine negative Spannung bezogen auf das an der Klemme 2 des Brückengleichrichters BG abgeifbare Potential. Diese Spannungsumkehr an der Basis des Schalttransistors T1 wird bewirkt durch die Umkehr der an der Steuerwicklung W3 abgreifbaren Spannung. Der Sperrvorgang im Schalttransistor wird über den Steuertransistor T2 eingeleitet, und über die Steuerwicklung W3 während der Entmagnetisierung aufrechtgehalten.

Während der Sperrphase des Schalttransistors T1 ist auf der Sekundärseite des Übertragers Ü die Gleichrichterdiode D3 in Rückwärtsrichtung gepolt und daher stromlos. Aufgrund der in der Induktivität L gespeicherten Energie fließt der Strom durch diese, den Lastwiderstand RL und die jetzt leitende Freilaufdiode D4 in gleicher Richtung weiter. Wie schon ausgeführt, wird dieser Stromfluß auch aufrechterhalten, wenn während der Leitendphase des Schalttransistors T1 der Sekundärschalttransistor T3 zur Einhaltung eines vorgegebenen Wertes der Ausgangsgleichspannung UA gesperrt ist.

Die während der Leitendphase des Schalttransistors T1 vom Transformatorkern des Übertragers Ü aufgenommene Magnetisierungsenergie fließt während der Sperrphase des Schalt-

84 P 0457082 E3

transistors T1 über die Entmagnetisierungswicklung W2 und die Diode D1 als elektrischer Strom in die Spannungsquelle, das heißt in den Kondensator C 1 zurück. Nach der Entmagnetisierung des Übertragers Ü und im stromlosen Zustand der Freilaufdiode D4 wird der Schalttransistor T1 erneut leitend geschaltet. Die während der Sperrphase des Schalttransistors T1 an dessen Basis anliegende negative Spannung ist nach der Entmagnetisierung abgebaut. Über den Widerstand R3 und die Steuerwicklung W3 wird der Kondensator C2 wieder aufgeladen und der Schalttransistor T1 erneut leitend geschaltet. Die Diode D2 dient zum schlagartigen Entladen des Kondensators C3 zu Beginn der Sperrphase des Schalttransistors T1.

Der dem erfindungsgemäßen Schaltnetzteiles zugrundeliegende Gedanke ist, daß der Einschaltzeitpunkt des Schalttransistors T1 und somit seine Schaltfrequenz nicht fest vorgegeben sind. Der Schalttransistor T1 wird nach der Entmagnetisierung des Übertragers Ü und im stromlosen Zustand der Freilaufdiode D4 selbständig wieder eingeschaltet. Dadurch ist sichergestellt, daß der Schalttransistor T1 nicht unter Strom eingeschaltet wird, und daß ein dreieckförmiger Kollektorstrom im Primärkreis fließt, der leicht entstörbar ist.

Im erfindungsgemäßen Schaltnetzteil wird der Schalttransistor T1 für eine vorgegebene Zeit leitend geschaltet. Nach dieser Einschaltdauer, d.h. während der Sperrphase des Schalttransistors T1 wird der Übertrager Ü entmagnetisiert. Nach der Entmagnetisierung und daher im stromlosen Zustand der Freilaufdiode D4 wird der Schalttransistor T1 erneut eingeschaltet. Das Ende der Entmagnetisierung wird dabei im wesentlichen über die Steuerwicklung W3 erkannt.

Zur Einhaltung eines konstanten Wertes der Ausgangsgleichspannung UA wird ein Sekundärschaltregler SS mit einem Sekundärschalttransistor T3 verwendet, dessen Einschaltzeitpunkte über den Widerstand R5 mit denen des Schalt-transistors T1 synchronisiert werden. Über das Tastverhältnis des Sekundärschalttransistors T3 wird der Wert der Ausgansgleichspannung UA eingestellt.

Mit dieser Anordnung, das heißt über mehrere an den Klemmen 3, 4 und 5 angeschalteten Sekundärschaltreglern können mehrere Ausgangsspannungen mit hoher Genauigkeit ge-regelt werden.

Als Schalttransistor T1, sowie des Sekundärschalttran-sistors T3 ist im erfindungsgemäßen Schaltnetzteil jedes steuerbare Halbleiterschaltelement verwendbar.

7 Patentansprüche
1 Figur

## Bezugszeichenliste

| | |
|---|---|
| T1 | Schalttransistor |
| T2 | Steuertransistor |
| W1 | Primärwicklung |
| W2 | Entmagnetisierungswicklung |
| W3 | Steuerwicklung |
| W4 | Sekundärwicklung |
| Ü | Übertrager |
| BG | Brückengleichrichter |
| UE | Eingangswechselspannung |
| UA | Ausgangsgleichspannung |
| D1, D2 | Dioden |
| D3 | Gleichrichterdiode |
| D4 | Freilaufdiode |
| L | Induktivität |
| RL | Lastwiderstand |
| E1, E2 | Eingangsklemmen |
| A1, A2 | Ausgangsklemmen |
| UG | Gleichspannung |
| C1 bis C4 | Kondensator |
| R1 bis R8 | Widerstände |
| T3 | Sekundärschalttransistor |
| T4 | Transistor |
| Z | Zenerdiode |
| SS | Sekundärschaltregler |

Patentansprüche

1. Schaltnetzteil mit einer Gleichrichteranordnung (BG) zur Erzeugung einer Gleichspannung (UG) aus einer Eingangswechselspannung (UE), und mit einer einen Schalttransistor (T1) und einen Übertrager (Ü) aufweisenden Umrichteranordnung,
d a d u r c h   g e k e n n z e i c h n e t , daß die Umrichteranordnung als freischwingender Durchflußumrichter ausgebildet ist, wobei der Schalttransistor (T1) im stromlosen Zustand eingeschaltet wird, und
daß die Umrichteranordnung sekundärseitig einen, vom Übertrager (Ü) synchronisierten, eine Ausgangsgleichspannung (UA) regelnden Sekundärschaltregler (SS) aufweist.

2. Schaltnetzteil nach Anspruch 1,
d a d u r c h   g e k e n n z e i c h n e t , daß an der Basis des Schalttransistors (T1) ein Teil der Gleichspannung (WG) anliegt,
daß der Übertrager (Ü) eine Steuerwicklung (W3) aufweist,
daß eine Einschaltstufe und eine Ausschaltstufe zur Steuerung des Schalttransistors (T1) vorgesehen sind,
daß bei einem entmagnetisierten Übertrager (Ü) der Schalttransistor (T1) über die Einschaltstufe und über die Steuerwicklung (W3) leitend geschaltet wird, und nach einer vorgebbaren Einschaltdauer durch den in der Steuerwicklung (W3) induzierten Strom über die Ausschaltstufe gesperrt wird.

3. Schaltnetzteil nach Anspruch 1 oder 2,
d a d u r c h   g e k e n n z e i c h n e t , daß die Einschaltstufe aus einem Widerstand (R3) und einem Kondensator (C2) in Serie besteht.

4. Schaltnetzteil nach einem der Ansprüche 1 bis 3,
d a d u r c h   g e k e n n z e i c h n e t , daß die Ausschaltstufe aus einem Steuertransistor (T2), einem Kondensator (C3) und einem Widerstand (R4) besteht, wobei die Einschaltdauer durch den Widerstand (R4) und den Kondensator (C3) bestimmt ist

5. Schaltnetzteil nach einem der Ansprüche 1 bis 4, d a d u r c h   g e k e n n z e i c h n e t , daß dem Widerstand (R4) eine Diode (D2) parallel geschaltet ist, die zu Beginn der Entmagnetisierung des Übertragers (Ü) den Kondensator (C3) schlagartig entlädt.

6. Schaltnetzteil nach einem der Ansprüche 1 bis 4, d a d u r c h   g e k e n n z e i c h n e t , daß einem Eingang des Sekundärschaltreglers (SS) an dem eine zu regelnde Spannung anliegt, eine Gleichrichterdiode (D3) vorgeschaltet ist, die eine pulsierende Gleichspannung erzeugt.

7. Schaltnetzteil nach einem der Ansprüche 1 bis 6, d a d u r c h   g e k e n n z e i c h n e t , daß ein Widerstand (R5) vorgesehen ist, über den die Einschaltzeitpunkte eines im Sekundärschaltregler (SS) angeordneten Sekundärschalttransistors (T3) mit denen des Schalttransistors (T1) synchronisiert werden.

Europäisches
Patentamt

EUROPÄISCHER RECHERCHENBERICHT

0170293
Nummer der Anmeldung

EP 85 10 9836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 069 256 (FARRER) * Seite 1, Zeilen 31-44; Seite 2, Zeilen 27-48 * | 1 | H 02 M 3/338 |
| | --- | | |
| A | DE-A-2 608 167 (KIENSCHERF) * Seite 2, Zeile 19 - Seite 3, Zeile 9 * | 1 | |
| | --- | | |
| A | WO-A-8 203 302 (VINCIARELLI) * Seite 3, Zeile 5 - Seite 4, Zeile 31 * | 1 | |
| | --- | | |
| A | PATENTS ABSTRACTS OF JAPAN, Band 5, Nr. 159 (E-77)[831], 14. Oktober 1981; & JP - A - 56 88 672 (FUJITSU K.K.) 18.07.1981 | 1 | |
| | ----- | | |

RECHERCHIERTE SACHGEBIETE (Int. Cl 4)

H 02 M

Der vorliegende Recherchenbericht wurde für alle Patentansprüche erstellt

| Recherchenort | Abschlußdatum der Recherche | Prüfer |
|---|---|---|
| DEN HAAG | 05-11-1985 | KERN H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument